# EUROPEAN PATENT APPLICATION

(11) **EP 4 817 839 A1**
(43) Date of publication of application: **07.10.2026**
(21) Application number: 26170074.4
(22) Date of filing: 31.03.2026
(51) Int. Cl.: B29C 35/02, B29C 70/00, B29C 73/22, B29C 70/06, B29C 73/34

(54) **SELF-HEALING FIBRE-REINFORCED COMPOSITE AND METHOD THEREOF**

(30) Priority: 01.04.2025 PT 2025120174
(71) Applicant: Associação Fibrenamics - Instituto de Inovação em Materiais Fibrosos e Compositos, 4800-058 Guimarães (PT)
(72) Inventor: VIEIRA NOBRE, LUÍS TIAGO, 4800-071 GUIMARÃES (PT); COSTA MOTA, CARLOS MIGUEL, 4720-535 BRAGA (PT); GOMES DURÃO, MARIA LUÍSA, 3810-406 AVEIRO (PT); SOUSA BESSA SOARES, JOÃO LUÍS, 4470-158 MAIA (PT); MACEDO DA CUNHA, FERNANDO EDUARDO, 4715-592 BRAGA (PT); ESTEVES DE SOUSA FANGUEIRO, RAUL MANUEL, 4715-386 BRAGA (PT)
(74) Representative: Patentree

(57) **Abstract**

The present disclosure relates to a self-healing fibre-reinforced composite and a method to obtain said self-healing fibre-reinforced composite, the self-healing fibre-reinforced composite comprising: a thermosetting epoxy polymeric matrix (1) and reinforcing fibres; wherein the polymeric matrix comprises solid polylactic acid as a thermoplastic healing agent (2).

## Description

### TECHNICAL FIELD

The present disclosure relates to a self-healing material, specifically to a fibre-reinforced composite that regenerates and additionally can be heated through the application of electrical current, and its manufacturing method.

### BACKGROUND

Polymeric fibre-reinforced composites, including high-performance ones, are susceptible to damage during their service life. This damage may manifest as micro-delamination of reinforcing fibres, microcracking or microfractures, caused by environmental and operational factors such as impact, mechanical and thermal stresses, pressure, corrosion, chemical abrasion and/or photodegradation, or wear.

Such defects, even if minor, can significantly compromise the material's structural and functional integrity, potentially escalating to severe damage and ultimately catastrophic failure. For this reason, damage must be addressed promptly to ensure safety, extend material's service life and minimize maintenance requirements and associated costs.

However, the repair of fibre-reinforced composites is often neither straightforward nor simple, due to the application context and the location of the damage within the material structure. These composites are frequently employed in devices exposed to potentially damaging conditions, where access for maintenance and repair is challenging and costly. Examples include structural components of aerospace and aeronautic devices, self-defense and protective equipment, wind turbine blades and civil engineering structures such as building elements or pipelines, among others. Furthermore, damage frequently occurs within the internal structure of these materials, complicating both damage detection and repair.

Most structural and high-performance composites feature a thermosetting epoxy-based matrix, which limits the material's ability to intrinsically recover its mechanical properties after damage. As a result, extrinsic self-healing emerges as a promising solution in which extraneous healing agents are incorporated on the polymeric matrix of the composite enabling the repair of damage as it occurs. This approach, inspired by biological systems, allows materials to prematurely and easily address flaws, thereby extending service life, improving security and reducing maintenance costs.

Existing options for extrinsic self-healing in composites typically fall into two categories: reservoir-based approaches or thermoplastic-based systems. The former relies on small reservoirs, such as capsules, hollow fibres or microvascular networks, that contain the healing agents. These act through polymerization reactions or intertwining/cross-linking of polymeric chains, upon release of the healing agents which occur when reservoirs are ruptured due to damage. Alternatively, thermoplastic-based systems incorporate a thermoplastic polymer into the composite that will melt or soften and fill the voids created by the damage.

Document US6518330 discloses a self-healing composite material, with a polymer, a polymerizer, a corresponding catalyst for the polymerizer, and a plurality of capsules, where the polymerizer is located.

Document US11926728 is another example of a self-healing polymer comprising a base polymer, at least one healing agent disposed in the base polymer under pressure and a vessel for holding the healing agent, which vasculature is randomly dispersed throughout the base polymer.

Document CN116393057 reports a graphene oxide modified bio-based microcapsule as well as its preparation method and application. According to the prepared microcapsule, the intrinsic barrier property of a bio-based coating can be improved while the coating is endowed with the self-healing property, and the corrosion resistance of the coating is improved.

While a variety of self-healing solutions exist, thermoplastic-based systems stand out considering their simplicity of implementation, compatibility with the already existing manufacturing processes, and capacity for repeated healing cycles. Various thermoplastic polymers have been explored for use in epoxy matrix composites, with particular attention to poly(ethylene-co-methacrylic acid) and poly(methyl methacrylate). Despite being well-suited for such applications, considering their good affinity with the epoxy matrix, ensuring effective stress transfer between both polymers after healing, these specific thermoplastics can be prohibitively expensive, limiting their practicality for widespread, real-world applications. Therefore, alternative, more cost-effective solutions are essential.

Document US9976051 discloses a polymer composition comprising a first polymer phase and a second polymer phase, wherein: a) the first polymer phase comprises a thermoplastic polymer matrix modified with an adhesive functional group or a group which is a precursor of an adhesive functional group; and b) the second polymer phase comprises a thermoplastic polymer capable of acting as a self-healing agent and being chemically reactive on healing of the polymer composition. This document does not contemplate the utilization of a thermosetting epoxy matrix, typically preferred for materials of superior performance. Furthermore, the document lacks a method for melting the material without direct temperature application.

Document US9150721 provides a self-healing polymer material comprising thermoset and thermoplastic polymers. Specifically, it provides a method of manufacturing the self-healing material, of post-curing and healing the material and of preparing the composite material. This document considers the usage of a functionalized polyolefin or copolymer, such as polyethylene co-methacrylic acid (EMAA), but not a simpler commercial alternative. Similarly to the previous case, this document also does not contemplate an alternative and indirect heating method.

Document GB2421953 reports a self-healing composite material that comprises a fibre-reinforced polymer matrix containing a thermosetting polymer and a thermoplastic polymer that together form a solid solution. The reinforcing fibres may be carbon fibres forming one or more layers. Preferably, the thermosetting polymer is an epoxy resin and the thermoplastic polymer is polybisphenol-A-co-epichlorohydrin. A method for forming the composite is also disclosed, whereby a solution of a prepreg of the thermosetting and thermoplastic polymers may be used to impregnate a layer of reinforcing fibres before curing the thermosetting polymer. In another aspect, the composite comprises a fibre-reinforced polymer matrix containing a thermosetting polymer and a thermoplastic polymer with a damage detection system. The detection system may detect changes in acoustic wave propagation or resistance. Any damage may be repaired by a method in which the affected area is heated to the fusion temperature of the thermoplastic polymer, for example, by passing a current through the fibres. This document also relies on a very specific healing polymer, polybisphenol-A-co-epichlorohydrin, which is not typically widely available. Additionally, the composite requires at least a carbon layer to generate heat and heal without direct temperature application. Moreover, the melting of the thermoplastic polymer typically relies on direct temperature application, which may compromise the independent actuation of the self-healing composite. To address this limitation, the encapsulation of solvents capable of dissolving the thermoplastic has been explored as a method for transporting the polymer to the damage. However, the synthesis and integration of these capsules is not a straightforward or immediate process. Furthermore, concerns arise regarding the chemical stability of these solvents when encapsulated over extended periods, before the damage event occurs.

These facts are disclosed in order to illustrate the technical problem addressed by the present disclosure.

### GENERAL DESCRIPTION

The present disclosure relates to a self-healing material, specifically to a fibre-reinforced self-healing composite material.

The present disclosure relates to a self-healing fibre-reinforced composite for applications requiring a good mechanical performance, but wherein detecting minor damage and conducting manual repairs is challenging, due to limited accessibility. By providing these materials the capacity of autonomously and prematurely repair flaws, the present disclosure also aims to extend their service life, reduce maintenance need and its associated costs and enhance overall safety.

The present disclosure aims to propose an alternative self-healing composite material, more cost-effective, with an associated heating mechanism, and a simpler approach for its production.

The term "self-healing composite" refers to a composite material capable of at least partially restoring one or more properties after damage, particularly after the formation of cracks, microcracks, delamination, matrix fracture, or interfacial damage, without requiring replacement of the composite material. The restoration may include recovery of mechanical integrity, stiffness, strength, toughness, and may occur upon exposure to an external stimulus such as heat.

The term "solid polylactic acid" refers to polylactic acid present in a non-liquid form within the composite, for example as particles, granules, fibres, filaments, under ambient conditions and/or prior to activation of the healing mechanism, particularly the heating mechanism.

The present disclosure introduces a self-healing composite comprising a thermoplastic-based system and its corresponding heating mechanism which is easy to integrate in an already existing fibre-reinforced composite manufacturing process.

In an embodiment, the self-healing fibre-reinforced composite comprises a thermosetting epoxy-based polymeric matrix, a reinforcing fibre, a thermoplastic healing agent and graphene nanoplatelets (GNPs)-based coating applied to the reinforcing fibre.

In an embodiment incorporates polylactic acid (PLA), as the thermoplastic healing agent, and a graphene nanoplatelets (GNPs)-based fibre coating, as the heating system, into a fibre-reinforced composite.

PLA is preferred because it offers a cost-effective and widely commercially available alternative for thermoplastic-based self-healing composites compared to previously mentioned options. For that reason, it might be more suitable and practical for real-world commercial applications, particularly within the already existing fibre-reinforced composite production processes.

Furthermore, PLA demonstrates chemical compatibility with the cured epoxy polymer used in the composite's matrix. Specifically, it may interact via intermolecular forces, such as hydrogen or ester bonding, between the hydroxyl (OH) groups formed during epoxy curing and the carboxyl terminal groups or the carbonyl groups of PLA. These interactions result in a good interfacial adhesion between the two polymers, enabling effective stress transfer and consequently ensuring the adequate recovery of the mechanical properties of the fibre reinforced composite that may have been compromised during damage.

During the healing process, PLA will soften or melt upon adequate temperature application, for example by a direct application of external heating, and fill small voids created by damage, therefore facilitating repair.

The heating of the PLA can also be achieved through the application of a GNPs-based coating on the reinforcing fibres, that will increase the composite's temperature through joule heating, when an electrical current is applied.

GNPs-based coating may be preferred due to its Joule heating capacity, which enables a temperature increase without the need for direct application of external heating.

In an embodiment, the self-healing fibre-reinforced composite comprises:
a thermosetting epoxy-based polymeric matrix;
a reinforcing fibre of any type and in any configuration;
a thermoplastic polymer, preferably PLA;
a GNPs-base coating for the reinforcing fibres, that will enable heating and consequent soften or melting of the PLA, when an electrical current is applied.

The present disclosure relates to a self-healing fibre-reinforced composite comprising a thermosetting epoxy (epoxy- base) polymeric matrix and reinforcing fibres; wherein the polymeric matrix comprises solid polylactic acid as a thermoplastic healing agent.

The present disclosure provides a synergistic self-healing mechanism that overcomes the limitations of traditional thermoset composites. While PLA is known as a biodegradable polymer, its use as a solid-phase healing agent within a cured epoxy matrix-specifically tailored to chemically interact with the epoxy during the melting phase.

In an embodiment, the amount of polylactic acid in the thermosetting epoxy polymeric matrix ranges from 1 - 40 wt. %.

In an embodiment, the amount of polylactic acid in the thermosetting epoxy polymeric matrix ranges from 5 to 30 wt. %, preferably 10% - 25 wt. %.

In an embodiment, the polylactic acid is in the form of particles, electrospun fibres or filaments or combinations thereof.

In an embodiment, the polylactic acid is in the form of particles, more preferably particles from 1 to 250 µm, more preferably from 10 to 200 µm, more preferably from 20 to 100 µm, measured by sieving.

In an embodiment, the reinforcing fibre comprises a coating as heating element.

In an embodiment, the coating comprises graphene and a polymeric matrix, preferably the polymeric matrix is a thermoplastic polyurethane matrix.

The integration of graphene nanoplatelets (GNPs) as a fibre coating provides a dual-functionality: it reinforces the interface while enabling localized Joule heating. This allows a healing that is energy-efficient and avoids degrading the bulk properties of the epoxy matrix.

In an embodiment, the graphene is in the form of nanoplatelets.

In an embodiment, the amount of the graphene nanoplatelets ranges from 4 - 20 wt. %, preferably at least 8 - 15 wt. %, more preferably at least 10 - 13 wt. %.

In an embodiment, the composition further comprises a conductive ink arranged above the coating, preferably at each end of the fibre.

In an embodiment, the conductive ink is a silver ink.

In an embodiment, an electrically conductive wire is coupled to the ink.

In an embodiment, the coupling of electrically conductive wire and the ink is made by a polymer-based adhesive.

In an embodiment, the amount of reinforcing fibre is from 50 wt% to 75 wt%, preferably from 60 wt.% to 70 wt.%, more preferably 70 wt. %.

In an embodiment, the grammage of the reinforcing fibre is 100 g/m2 to 800 g/m², more preferably from 200 g/ m² to 400 g/m².

In an embodiment, the reinforcing fibre is selected from a carbon fibre, polyethylene fibre, glass fibre or combinations thereof. Preferably the polyethylene fibre is an ultra-high-molecular-weight polyethylene fibre.

The present disclosure further relates to a method of manufacturing the self-healing fibre-reinforced composite according to any of the previous claims, comprising the following steps:
drying 1-40 wt.% of polylactic acid;
disposing a curing agent and an epoxy resin for obtaining the thermosetting epoxy polymeric matrix;
mixing the polylactic acid with the curing agent or the epoxy resin;
mixing polylactic acid with the curing agent and the epoxy resin;
adding the reinforcing coated fibre and mixing to obtain a mixture;
curing the mixture.

In an embodiment, the curing is with a hot press at a 110 °C for at least 10min, with 4KN.

In an embodiment, the method further comprises a previous step of coating the reinforcing fibre.

In an embodiment, the coating of the fibre comprises the following steps:
mixing the graphene nanoplatelets with a polymeric solution for obtaining a solution as coating, followed by sonification for optimal dispersion;
applying of the solution to the reinforcing fibre;
drying the fibre comprising the coating for at least 24 h;
applying a conductive ink at each fibre end;
coupling the electrically conductive wire to the conductive ink.

In an embodiment, the coupling of the electrically conductive wire to the conductive ink is made by a polymer-based adhesive.

In an embodiment, the conductive ink is a silver ink.

In an embodiment, the polymeric matrix of the coating is thermoplastic polyurethane at a concentration of 4 to 20 wt. %, preferably 15 wt. %.

It is also disclosed a method of regenerating the self-healing fibre-reinforced composite, comprising the step of heating the composite.

In an embodiment, the heating can be made by direct application of external heating (for example an external heater) or by the application of an electrical current.

### BRIEF DESCRIPTION OF THE DRAWINGS

The following figures provide preferred embodiments for illustrating the disclosure and should not be seen as limiting the scope of invention.
**Figure 1****:** Schematic representation of the self-healing material, where 1 represents the thermosetting matrix, 2 the thermoplastic particles, 3 the damage, 4 the damage healed by the thermoplastic and 5 the melted thermoplastic filling the damaged area.
**Figure 2****:** Scanning electron microscope (SEM) image of a sample of the self-healing material that presents a surface fracture and PLA particles (zoom in), before healing.
**Figure 3****:** SEM image of a sample of the self-healing material after healing, where the melted PLA particles filled in the voids.

### DETAILED DESCRIPTION

The present disclosure relates to a self-healing material, specifically to a fibre-reinforced self-healing composite material. It relates to a self-healing fibre-reinforced composite comprising: a thermosetting epoxy polymeric matrix and reinforcing fibres; wherein the polymeric matrix comprises polylactic acid in solid form as a thermoplastic healing agent.

The present disclosure pertains to the development of functional self-healing fibre-reinforced composites with an epoxy-based thermosetting matrix. These are designed for applications where repairing damage is particularly challenging, due to limited accessibility, for example. This can be the case of materials used in aerospace devices, protective equipment, among others. To address this, it is here proposed the incorporation of a thermoplastic, specifically polylactic acid (PLA), that can chemically interact with the cured epoxy resin. Upon exposure to an appropriate temperature, such thermoplastic will soften or melt, filling the voids created by the damage, adhering effectively to the epoxy surface, and thereby restoring a significant portion of the composite's mechanical properties, lost during damage. This heating can be more easily achieved through the coating of the reinforcing fibre with a graphene nanoplatelets (GNPs)-based formulation that will enable joule heating of the composite, when an electrical current is applied.

In an embodiment, the self-healing fibre-reinforced composite incorporates polylactic acid (PLA) as the thermoplastic healing agent, along with a graphene nanoplatelets (GNPs)-based fibre coating for heating and soften or melting of the aforementioned polymer.

The disclosed self-healing fibre-reinforced composite comprises:
a thermosetting epoxy-based polymeric matrix **1;**
a reinforcing fibre, which can be of any type and configuration;
a thermoplastic polymer acting as the healing agent, preferably PLA **2;**
optionally a GNPs-base fibre coating, acting as the heating element.

In an embodiment, the reinforcement fibre is a carbon fibre or glass fibre.

In an embodiment, the PLA **2** content should be 1 - 40 wt%, preferably 10 wt. % - 25 wt. %, relative to the total mass of the thermosetting polymeric epoxy matrix **1.**

In an embodiment, the PLA **2** is added in the form of particles, electrospun nanofibres, filaments, among other structures, preferably particles for easier implementation.

In an embodiment, the GNPs content on the reinforcing fibre coating may be from 4 and 20 wt. % relative to the total mass, preferably at least 8 wt. %.

In an embodiment, the GNPs are dispersed on a polymeric matrix, more preferably a thermoplastic polyurethane (TPU) - based one.

In a self-healing composite of this type, when damage **3** occurs, PLA 2 will soften or melt **5** upon the application of a pre-determined temperature, whether applied directly or indirectly. This enables it to fill the voids created by the damage **3,** facilitating the healing process and restoring at least a portion of the composite's mechanical properties

The PLA **2** exhibits good chemical compatibility with the cured epoxy matrix **1,** promoting adequate interfacial adhesion. This ensures that, after recovery, stress is effectively transferred between the polymers, consequently allowing for the restoration of a significant portion of the composite's lost mechanical properties.

A good dispersion of PLA within the composite is ensured, irrespective of the method.

Surprisingly, PLA **2** softens or melts in response to localized heating, filling voids created by damage **3,** to facilitate healing and restore at least a portion of the composite's mechanical properties.

In an embodiment, the process of softening or melting the PLA **2** can be facilitated by applying a GNPs-based coating to the reinforcing fibres. This coating will enable an increase in the composite's temperature when appropriate electrical current is applied.

In an embodiment, a GNPs-based coating is applied to the reinforcing fibre to promote sufficient localized Joule heating of the composite, upon the application of an electrical current.

In an embodiment, the content of PLA **2** in the epoxy matrix and of GNPs on the reinforcing fibre coating is selected to maximize healing efficiency and thermally efficiency, respectively.

In an embodiment, when PLA **2** is used in the form of particles directly incorporated within the polymeric matrix **1,** it should preferably be mixed with only one of the resin parts, first.

In an embodiment, the process comprises the following steps:
drying of the PLA **2;**
mixing the PLA **2** with either the epoxy resin itself or the curing agent of the thermosetting epoxy polymeric matrix, ensuring a good dispersion. Ideally, an appropriate mixing device should be used, for about 15 min;
adding the remaining component of the epoxy resin (either the curing agent or the resin itself, depending on previous step) followed by slow but thorough mixing of the formulation until it is homogeneous;
impregnating the reinforcing fibre with the prepared matrix **1** mixture using hand lay-up method or any alternative approach;
curing by hot press at 110°, 4 KN, for 10min.

In an embodiment, to obtain the thermosetting epoxy polymeric matrix, there is a mixture between the epoxy resin and a curing agent. The PLA can be added on the epoxy resin or on the curing agent.

This method ensures that undesirable premature curing of the epoxy resin does not occur while achieving a uniform dispersion of the PLA **2.**

In an embodiment, PLA **2** may be applied in any other form - such as particles, electrospun fibres, filaments or other shapes. It may be directly integrated into the reinforcing fibre, which can involve surface application or embedding through the fibre thickness, for instance, as a z-binder.

In an embodiment, the content of PLA in the thermosetting epoxy-based polymeric matrix and of GNPs on the reinforcing fibre coating is selected to maximize healing efficiency and thermally efficiency, respectively.

A good dispersion of PLA within the composite is ensured, irrespective of the method.

In an embodiment, the coating can be prepared by mixing GNPs with a solution of a polymeric matrix **1,** such as thermoplastic polyurethane (TPU), at a concentration of approximately 15 wt.% using suitable solvents. For instance, a solvent system of Dimethylformamide (DMF) and Tetrahydrofuran (THF) in a 2:1 ratio may be used. Alternative solvents, TPU concentrations, or polymeric matrices may also be considered, depending on the specific reinforcing fibre and the composite's polymeric matrix 1. The coating can be applied to some or all layers of the reinforcing fibre.

The processes of coating the reinforcing fibre comprises the following steps:
mixing of the GNPs with the polymeric solution (for example 15 wt% TPU with DMF:THF in a 2:1 ratio). Initial mechanical stirring, of about 1h and 400 rpm to 600 rpm should be followed by sonification, for about 1h, for optimal dispersion;
applying the coating to the reinforcing fibre, using knife coating or another suitable coating technique;
drying of the coating on the fibre. A drying period of 24 h is preferably;
applying the electrodes at the ends of the coated fibre;
incorporating the resulting coated fibre into the previously described process for composite's preparation.

In an embodiment, the application of the electrodes is made by deposition of conductive ink. Preferably the coating is a silver ink.

In an embodiment, the conductive ink is applied at the fibre's extremities.

In an embodiment, after the application of the coating, electrically conductive wires are coupled/attached to the top of said the conductive ink.

In an embodiment, the coupling of the electrically conductive wires to the conductive ink is by polymer-based adhesive. Preferably the polymer-based adhesive is SikaBiresin^{®} CR83 or Araldite^{®}.

In an embodiment, GNPs should be present in the reinforcing fibre coating at a concentration between 4 % and 20 wt. %, preferably at least 8 wt. %.

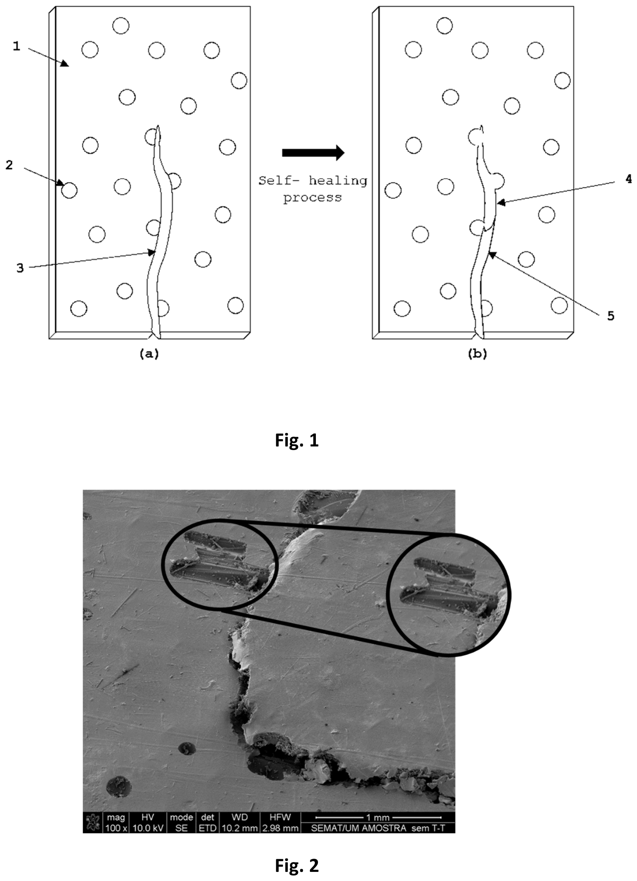

**Figure 1** represents the self-healing composite material before and after the healing process, where 1 corresponds to the thermosetting matrix, **2** to thermoplastic particles, **3** to the damage, **4** to the damage healed by the thermoplastic and **5** to the melted thermoplastic filling the damaged area.

**Figure 2** displays a SEM image of a sample of the self-healing material before the healing process, where it is visible a fracture and PLA particles **2** in its surface (zoomed in). After the sample underwent the healing process, a new SEM analysis was conducted.

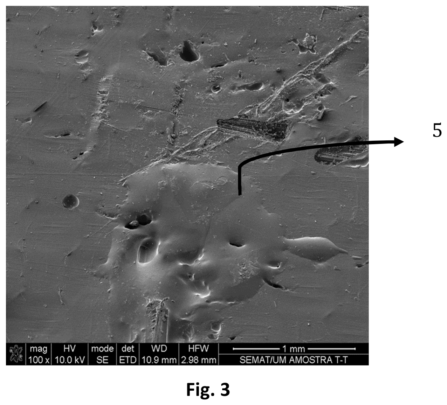

**Figure 3** displays the surface of the self-healing material (SEM image) after healing, where it is visible the melted PLA particles **5** filled in the open spaces of the fractures.

A comparation between a reference sample without PLA as thermoplastic healing agent and a sample 1 was made.

Reference sample comprised: an epoxy matrix composite reinforced with 16 layers of unidirectional carbon fibre, having a grammage of 300 g/m², disposed in an auxetic configuration

Sample 1 comprised: an epoxy matrix composite reinforced with 16 layers of unidirectional carbon fibre, having a grammage of 300 g/m², disposed in an auxetic configuration, and containing PLA particles (≤ 250 µm) in a concentration of 10 wt%, was made.

**Table 1 - Experimental results of Reference Sample and Sample 1.**

| | **Flexural modulus (GPa)** | **Ultimate flexural strength (MPa)** |
|---|---|---|
| **Reference Sample** | 37 ± 1 | 434 ± 14 |
| **Sample 1** | 39 ± 1 | 447 ± 20 |

Experimental results demonstrated a healing efficiency of 80% after heating the composite, confirming the system's effectiveness without hindering the material's original mechanical properties.

The scope of this disclosure is not limited to the embodiments and methods described herein. A person skilled in the art will readily foresee numerous modifications and alternatives that remain within the scope of this invention.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable.

The following claims further set out particular embodiments of the disclosure.

## Claims

1. A self-healing fibre-reinforced composite comprising:
a thermosetting epoxy polymeric matrix and reinforcing fibres;
wherein the polymeric matrix comprises polylactic acid in solid form as a thermoplastic healing agent.

2. The composite according to the previous claim wherein the amount of polylactic acid in the thermosetting epoxy polymeric matrix ranges from 1 - 40 wt.%, preferably from 5 to 30 wt. %, more preferably 10- 25 wt. %.

3. The composite according to any of the previous claims wherein the polylactic acid is in the form of particles, electrospun fibres or filaments or combinations thereof.

4. The composite according to any of the previous claims wherein the polylactic acid is in the form of particles, more preferably particles from 1 to 250 µm, more preferably from 10 to 200 µm, more preferably from 20 to 100 µm, measured by sieving.

5. The composite according to any of the previous claims, wherein the reinforcing fibre comprises a coating as heating element, preferably the coating comprises graphene and a polymeric matrix, more preferably the polymeric matrix is a thermoplastic polyurethane matrix.

6. The composite according to the previous claim, wherein the graphene is in the form of nanoplatelets, preferably the amount of the graphene nanoplatelets ranges from 4 to 20 wt. %, preferably at least 8 - 15 wt. %, more preferably at least 10- 13 wt. %.

7. The composite according to any of the previous claims 5 to 6, further comprising a conductive ink arranged above the coating, preferably the conductive ink is a silver ink and preferably the conductive ink is arranged at each end of the fibre.

8. The composite according to any of the previous claims 5 to 7, wherein an electrically conductive wire is coupled to the ink, particularly the coupling of electrically conductive wire and the ink is made by a polymer-based adhesive.

9. The composite according to any of the previous claims 1 to 8, wherein the amount of reinforcing fibre is 50 wt.% to 75 wt.%, preferably from 60 wt.% to 70 wt.%, more preferably 70 wt.% and/or the grammage of the reinforcing fibre is 100 g/m² to 800 g/m², more preferably from 200 g/ m² to 400 g/m².

10. The composite according to any of the previous claims, wherein the reinforcing fibre is selected from a carbon fibre, polyethylene fibre, glass fibre or combinations thereof.

11. Method of manufacturing the self-healing fibre-reinforced composite according to any of the previous claims, comprising the following steps:
drying 1-40 wt. % of polylactic acid;
disposing a curing agent and an epoxy resin for obtaining the thermosetting epoxy polymeric matrix;
mixing polylactic acid with the curing agent or the epoxy resin;
adding the reinforcing coated fibre and mixing to obtain a mixture;
curing the mixture with a hot press.

12. Method according to the previous claim, further comprising a previous step of coating the reinforcing fibre.

13. Method according to any of the previous claims 11 to 12 comprising the following steps:
mixing the graphene nanoplatelets with a polymeric solution for obtaining the coating, followed by sonification for optimal dispersion;
applying the coating to the reinforcing fibre;
drying the fibre comprising the coating for at least 24 h;
applying a conductive ink at each fibre end;
coupling the electrically conductive wire to the conductive ink, preferably the coupling of the electrically conductive wire to the conductive ink is made by a polymer-based adhesive.

14. Method according to any of the previous claim 11 to 13, wherein the polymeric solution of the coating is thermoplastic polyurethane at a concentration of 4-20 wt. %, preferably 15 wt. %.

15. Method of regenerating the self-healing fibre-reinforced composite according to any of the previous claims 1 to 10 comprising the step of heating the composite.
